# EUROPEAN PATENT SPECIFICATION

(11) **EP 3 137 638 B1**
(45) Date of publication and mention of the grant of the patent: **30.10.2019**
(21) Application number: 15722466.8
(22) Date of filing: 28.04.2015
(51) Int. Cl.: C22B 7/04, C01F 7/16, C21C 7/064

(54) **METHOD FOR MANUFACTURING OF CALCIUM ALUMINATE FROM BLACK DROSS**
VERFAHREN ZUR HERSTELLUNG VON CALCIUMALUMINAT AUS SCHWARZER KRÄTZE
PROCÉDÉ DE FABRICATION D'ALUMINATE DE CALCIUM À PARTIR DE CRASSES NOIRES

(30) Priority: 29.04.2014 SE 1450505
(43) Date of publication of application: 08.03.2017
(73) Proprietor: Stena Aluminium AB, 343 21 Älmhult (SE)
(72) Inventor: OLAUSSON, Ronny, S-343 36 Älmhult (SE); FALK, Ola, S-352 35 Växjö (SE)
(74) Representative: Valea AB
(86) International application number: PCT/EP2015/059187
(87) International publication number: WO 2015/165895

(56) References cited:
- KR-A- 20100 121 149
- US-A- 5 135 565
- US-A- 5 385 601
- SHINZATO M C ET AL: "Solid waste from aluminum recycling process: characterization and reuse of its economically valuable constituents", WASTE MANAGEMENT, ELSEVIER, NEW YORK, NY, US, vol. 25, no. 1, 1 January 2005 (2005-01-01), pages 37-46, XP027619158, ISSN: 0956-053X [retrieved on 2005-01-01]
- PETERSON R D: "Review of aluminum dross processing", LIGHT METALS 2002 : PROCEEDINGS OF THE TECHNICAL SESSIONS PRESENTED BY THE TMS ALUMINUM COMMITTEE AT THE 131ST TMS ANNUAL MEETING, SEATTLE, WASHINGTON, FEBRUARY 17 - 21, 2002 / ED. BY WOLFGANG A. SCHNEIDER, MINERALS, METALS AND MATERIALS SOCIETY ALUM, 1 January 2002 (2002-01-01), pages 1029-1037, XP009185201, ISBN: 978-0-87339-519-9

## Description

### TECHNICAL FIELD

The invention relates to a process for manufacturing calcium aluminates from black dross.

### BACKGROUND OF THE INVENTION

Calcium aluminates are a range of minerals comprising calcium oxide and aluminium oxide that are useful in many industrial fields. In particular, calcium aluminates have proven useful in metallurgical applications. In steelmaking, calcium aluminates are used in large amounts as a steel slag or slag forming agents and/or desulphurizing agent.

Calcium aluminates for steelmaking comprise calcium oxide (CaO), aluminium oxide (Al₂O₃), monocalcium aluminate (CaO-Al₂O₃), monocalcium dialuminate (CaO-2Al₂O₃), tricalcium aluminate (3CaO-Al₂O₃) and dodecacalcium heptaaluminate (12CaO-7Al₂O₃), with an approximate chemical composition of 30-50 wt% of CaO and 40-55 wt% of Al₂O₃. The calcium aluminates may further comprise of chemical compounds such as SiO₂, TiO₂, Fe₂O₃ and MgO. The composition of the calcium aluminate will have an impact on its slag properties. For steelmaking, it is important that calcium aluminates exhibit slag properties such as fast metallurgical processing, good refining performance, high desulphurization capacity, high absorption of non-metallic inclusions, effective protection of the metal against reaction with air (for instance nitriding and oxidation), a melting point of about 1400-1700 °C or less, low viscosity and good fluidity.

It is fundamental for the function of slag that it is in the liquid state. Since the total treatment time in metallurgy, such as ladle metallurgy, usually is limited it is important that the slag melting time is short.

Due to the large amounts of calcium aluminates needed efficient and cost effective industrial production processes thereof are of major concern. Calcium aluminates may be synthesized by fusion of calcium oxide with aluminium oxide. It has also been proposed to produce calcium aluminates from so-called black dross.

Black dross is a by-product from aluminium melting, where the aluminium has been melted in the presence of a salt flux. Commonly, the salt flux comprises a mixture of sodium chloride and potassium chloride. Black dross typically contains a large amount of salts and aluminium oxide. The composition of the black dross may vary. For instance, the black dross may comprise 65-90 wt% of aluminium oxide, from 30 to 50 wt% of chloride salts, from 5 to 15 wt% of metallic aluminium and from 1 to 4 wt% of fluoride salts. Currently, black dross is deposited in landfills and has found no use on an industrial scale. Prior to deposition in landfills, however, the black dross has to be treated to minimize negative environmental impact in terms of, for instance, leakage of environmentally hazardous compounds such as chloride salts into the environment. Environmental concerns as well as cost aspects therefore prompt recycling of black dross. Recycling of black dross by conversion into calcium aluminates has been proposed. However, the presence of large amounts of chloride containing salts prevent black dross from being directly converted into high quality calcium aluminates. Most processes require a step of removing the chloride containing salts from the black dross by washing with water thereby making the recycling process more time consuming and also hazardous since black dross upon contact with water forms toxic, explosive and foul smelling gases.

EP 2 385 018 discloses a process for obtaining calcium aluminates from saline dross. The saline dross is first treated so that the salts are separated therefrom and a solid phase is obtained. The solid phase is subsequently used in the process for obtaining calcium aluminate.

EP 0 720 592 discloses a process for the preparation of calcium aluminate by calcining a mixture of aluminium dross residue and raw lime or limestone. It is stated that even though a dross residue of high salt content may be used directly in the process of the invention this is unsatisfactory because the salt adversely affects the nature of the product. The dross residue should therefore be washed with water in order to dissolve its salt content before being used in the process.

EP 0 733 591 discloses methods of processing aluminium dross, and aluminium dross residue, into calcium aluminate. The aluminium dross and the aluminium dross residue employed are salt-free, in particular free from NaCl and KCI. It is stated that this reduces processing problems and provides a superior product for use in steel making.

US 5,385,601 discloses a process for converting aluminum dross to ladle flux for steel processing. It is stated that an object is to provide a dross treatment process which maximizes the recovery of metallic aluminium while emphasizing the production and treatment of waste products to result in end-products that are environmentally benign, or salable to other industries, or both. The dross treatment process involves pretreating the dross to remove a substantial amount of metallic aluminum, and mixing the remaining alumina/metallic aluminium mixture with a flux containing silicon dioxide and calcium oxide to form a charging material. The charging material is melted at high temperature in a furnace provided with one or more plasma-arc electrodes, using a gas, such as argon, to form the plasma. The arc-forming gas contributes to the atmosphere within the furnace, decreasing oxidative reaction of aluminum. Volatile components such as NaCl/KCl are removed upon heating.

There remains a need for alternative methods allowing for direct conversion of black dross containing large amounts of chloride salts into calcium aluminates suitable for use in the steel industry.

It is an object of the present invention to overcome or at least mitigate some of the problems associated with the prior art.

### SUMMARY OF THE INVENTION

In accordance with the invention, there is provided a method for producing pre-melted calcium aluminate suitable for steel manufacturing, said pre-melted calcium aluminate comprising from 0 to 5 wt% of SiO₂. The method comprises the steps of:
- heating a mixture of black dross comprising 20 wt% or more of one or more chloride salts and CaO and/or a precursor thereof, wherein the CaO precursor comprises from 0 to 5 wt% of SiO₂, in an oxidizing atmosphere, thereby forming volatile components and melted material,
- removing the volatile components, and
- cooling the melted material thereby forming pre-melted calcium aluminate.

It will be appreciated that black dross comprising 20 wt%, of one or more chloride salts is understood to mean that the one or more chloride salts constitute 20 wt% of the black dross. Analogously, if the black dross comprises 30-50 wt%, of one or more chloride salts is understood to mean that the one or more chloride salts constitute 30-50 wt% of the black dross, etc.

Further, the black dross, the CaO and/or the CaO precursor may comprise from 0 to 5 wt%, of SiO₂. As a result, the pre-melted calcium aluminate may comprise from 0 to 5 wt%, of SiO₂. In particular, the method described herein does not require addition of SiO₂. Thus, in an aspect the method described herein does not comprise addition of SiO₂. It follows that SiO₂ is not added to the black dross, the CaO, the CaO precursor and/or the formed pre-melted calcium aluminate.

The oxidative atmosphere is understood to mean an atmosphere comprising or consisting of oxygen. The oxidative atmosphere may be provided by the oxygen fuel burner. For instance, the oxidative atmosphere may comprise combustion gases from an oxy fuel burner, and also oxygen.

The mixture may be heated to a temperature from about 1400 to about 1700 °C.

The heating may be performed for about 1 to 3 hours depending on the amount of black dross, CaO and/or CaO precursor used. Conveniently, the heating temperature may be monitored using a pyrometer.

The volatile components mainly comprise the black dross chloride salts while the melted material comprises calcium aluminates. As used herein, the volatile components are components that are present in gas form at production temperatures such as temperatures from 1400 to 1700 °C. Thus, the volatile components are present in solid form at room temperature.

The melted material may be poured out from the furnace and subjected to cooling. The cooling may take place by any suitable means such as pouring the melted material from the furnace into a suitable vessel. Thus, the cooling may take place by allowing the material to assume ambient temperature. Additionally or alternatively, cooling may take place using a cooling medium such as water. The thus formed calcium aluminate may be further transformed into a desired shape by, for instance, crushing into pieces and/or particles having a desired size distribution where dust formation is minimized or avoided

Contrary to expectation, it has been found that black dross containing a large amount of chloride salts may be used directly, i.e. without prior treatment to remove chloride salts, in an oxidative atmosphere such as air for producing calcium aluminate suitable for steel manufacturing. The resulting calcium aluminate contains little or no metallic aluminum and little or no chloride salts. As pointed out above, salt adversely affects black dross processing as well as the resulting calcium aluminate

For instance, black dross that may be used in the method described herein may comprise 20 wt% or more of one or more chlorides salts. Further, the black dross chloride content may vary from 20 to 60 wt%, from 30 to 60 wt%, from 40 to 60 wt%, from 45 to 55 wt%,or be about 20, 30, 40 or 50 wt% of the black dross. In a further example, the black dross may comprise from 50 to 70 wt%, from 55 to 65 wt%, from 60 to 70 wt% of one or more chloride salts.

It will be appreciated that although the method described herein uses black dross as a starting material, any kind of Al₂O₃ containing product having a chloride content as described for black dross herein is considered equivalent to black dross described herein.

The one or more chloride salts may be selected from alkali metal chloride salts such as sodium chloride (NaCl) and/or potassium chloride (KCl).

As used herein, the terms "calcium aluminate" and "calcium aluminates" are used interchangeably and intend mixtures of CaO and Al₂O₃.

The calcium aluminates produced in accordance with the method described herein is pre-melted, i.e. it is a vitreous or vitreous like product in which the Al₂O₃ and CaO have been melted together. This is in contrast to mechanical mixtures of Al₂O₃ and CaO, i.e. mixtures formed by mechanical mixing of Al₂O₃ and CaO, or calcium aluminate formed by partly melted and/or sintered Al₂O₃ and CaO.

The black dross used in the method described herein may be pretreated by crushing and/or removing metallic aluminum. However, the oxidative atmosphere of the method described herein will cause oxidation of any remaining metallic aluminum in the black dross so that no or substantially no metallic aluminum is present in the formed pre-melted calcium aluminate. As used herein, the terms "aluminum" and "aluminium" are used interchangeably.

The composition of the black dross used in the method described herein may vary depending on the source from where it is acquired. In addition to Al₂O₃ it may contain varying amounts of, for instance, carbon, SiO₂, Ti₂O₃, AlN, CaO, Fe, Fe₂O₃, FeO, MgO, metallic aluminium, fluoride salts such as CaF₂ and chloride salts such as NaCl and KCl. Preferably, the SiO₂ content is from 0 to 5 wt% such as 0, 1, 2, 3 4, or 5 wt%.

The black dross may comprise Al₂O₃ in amounts of about from 65 to 90 wt%, from 30-50 wt%, from 35 to 45 wt% or about 30 or 40 wt%. Further, the black dross may comprise Al₂O₃ in amounts of about from 40 to 70 wt%, from 40 to 60 wt%, from 45 to 55 wt% or from 30 to 40 wt%.The black dross may further comprise metallic aluminium in an amount of, for instance, from about 5 to 12 wt% and/or chloride salts as described herein. The black dross may further comprise fluoride salts in an amount from about 1-4 wt%.

In still a further example, the black dross may comprise carbon (1.0 wt%), SiO₂ (4.0 wt%), Ti₂O₃ (0.7 wt%), AlN (3.8 wt%), Al₂O₃ (24.2 wt%), CaO (1.7 wt%), Fe (0.9 wt%), MgO (7.0 wt%), NaCl (27.5 wt%), KCl (10.5 wt%) and metallic aluminium (18.7 wt%).

The black dross used in the method described herein may be mixed with calcium oxide (CaO) and/or a precursor thereof prior to melting and/or during melting. The black dross, CaO and/or the CaO precursor may be heated in a furnace as described herein. The heating temperature may vary from about 1400 to 1700 °C. As a result, the black dross, the CaO and/or the precursors of CaO form a melted material. Additionally, volatile components such as chloride salts are formed. Subsequently, the volatile components are removed and the melted material is cooled into pre-melted calcium aluminate. Removal of the volatile components may take place using evaporation at atmospheric pressure or under reduced pressure.

In the method described herein, CaO is added and mixed with the black dross. Additionally or alternatively to CaO, a CaO precursor may be used. The CaO precursor may be a compound or substance susceptible of being transformed into CaO. The transformation may take place by heating the CaO precursor thereby providing CaO Examples of CaO precursors that may be used in the method described herein include CaMg(CO₃)₂, CaCO₃, CaSO₄ and Ca(OH)₂. An example of a material containing CaO is dolomite, which essentially is a mixture of CaO and MgO. The dolomite may be composed of about 55-60 wt% of CaO and 35-45 wt% of MgO. The CaO may be used as such, i.e. neat, or in combination with commonly occurring impurities. If the CaO impurity is SiO₂ it may be present in an amount from 0.5 to 5 wt%. The CaO precursor may comprise from 0 to 5 wt%, of SiO₂. For instance, the CaO precursor may comprise 1, 2, 3, 4 or 5 wt% of SiO₂. The SiO₂ may be present as an impurity in the CaO precursor. The CaO or the CaO precursor may comprise no added SiO₂.

The amount of CaO and/or CaO precursor added will depend on the intended use of the resulting calcium aluminate. For example, in the method described herein the CaO may be added in an amount of about 0.3 to 0.5 kg per kg of black dross, and the CaO precursor may be added in an amount of about 0.1 to 0.2 kg per kg of black dross. In a further example, the CaO may be added in an amount of about 0.365 kg per kg of black dross, and the CaO precursor may be added in an amount of about 0.125 kg per kg of black dross

The heating may be performed in a furnace as known in the art. Furnaces useful in the method described herein include rotary kilns and reverberatory furnaces. Thus, furnaces that are commonly used and readily available on the market may be used requiring little or no special adaptation to perform the method described herein. The furnace may be lined with a suitable material such as Al₂O₃, MgO and mixtures thereof. It is recommended that the lining material is chosen so that a possible dissolution of part of such lining material during performance of the process described herein does not negatively influence the composition of the resulting calcium aluminate. In case some of the lining material coming off is Al₂O₃ it may be desired to add more of CaO. The lining material may comprise chromium and magnesium carbonate.

The furnace may be provided with a burner such as an oxy-fuel burner or an air-fuel burner. Oxy-fuel burners and air-fuel burners are well known in the art and readily available on the market.

The oxidative atmosphere makes the method described herein particularly suitable for use on an industrial scale. Thus, the method described herein may be an industrial method. Further, use of furnaces as known in the art increases the versatility and/or industrial applicability of the method described herein. The method may comprise production of several tons of calcium aluminate.

The method described herein provides pre-melted calcium aluminate that is free or substantially free from chloride salts despite being produced from black dross containing large amounts of chloride salts. As used herein, the expression "calcium aluminate free from or substantially free from chloride salts" intends calcium aluminates comprising 2, 1, 0.5, 0.25 wt% or less of chloride salts. In addition, calcium aluminate produced in accordance with the method described herein was found to contain no detectable metallic aluminium, which is due to efficient oxidation conditions. The SiO₂ content of the pre-melted calcium aluminate obtainable by the method described herein is low, such as from 0 to 5 wt%, from 3 to 5 wt% or equal to or less than 1, 2 or 5 wt%. The low SiO₂ content is a significant advantage since calcium aluminate containing substantial amounts of SiO₂ contribute to making a lot of dust thereby rendering handling difficult. A low SiO₂ content also minimizes or avoids that the produced calcium aluminate is brittle, i.e. falls into small fractions, since volume expansion due to formation of calcium silicate such as dicalcium silicate from the SiO₂ will take place to no or very little extent. Accordingly, the purity and quality of the calcium aluminate produced in accordance with the method described herein meets the high standards required for slag or desulphurizing agents used in the production of steel such as high quality steel. The pre-melted calcium aluminate may have a Al₂O₃ content from 50 to 65 wt%. The pre-melted calcium aluminate may also have an iron content equal to or less than 5 wt% such as 4, 3, 2 or 1 wt%. In contrast, it is noted that in methods aiming at maximizing recovery of metallic aluminum it may be desired to have a product with high SiO₂ content to facilitate crushing and removal of metallic aluminum. Further, the presence of SiO₂ is expected to lower the melt temperature thereby facilitating salt evaporation. The presence of SiO₂ may also have a beneficial impact on suppression of aluminum volatilization.

The pre-melted calcium aluminate produced in accordance with the method described herein may be used alone or together with further components. For instance, when the calcium aluminate Al₂O₃ content is higher than desired further CaO may be added. Advantageously, the method described herein allows for producing calcium aluminates of varying Al₂O₃ and CaO content. Thus, depending on the desired application the Al₂O₃ and CaO content may be varied. The added CaO may be added together with other compounds such as MgO, for instance as dolomite (CaO-MgO). The calcium aluminate and/or the further components may be crushed into pieces or particles of desired shape and size before use thereby achieving a desired size distribution where dust formation is minimized or avoided.

In spite of being produced from black dross having a high chloride content, the pre-melted calcium aluminate produced in accordance with the method described herein has proven useful as slag or a slag forming agent in a steel manufacturing process. Thus, the calcium aluminate formed in accordance with the method described herein may be used as a pre-melted synthetic slag former.

As used herein, the term "slag" is intended to mean a partially or entirely vitreous product that may be added to and optionally removed from a metal liquid product. Further, the term "slag forming agent" is intended to mean a compound or product used to form slag. Thus, there is also provided the use of calcium aluminate produced in accordance with the method described herein in steel manufacturing. The pre-melted calcium aluminate produced in accordance with the method described herein may be used as a desulphurizing agent in the steel manufacturing process. The calcium aluminate will function inter alia as slag, a slag forming agent, a synthetic slag former or a pre-melted slag forming agent that may be used alone or together with further slag forming agents such as lime and dolomite in steel manufacturing.

### DEFINITIONS

P stands for phosphorous.
S stands for sulphur.
wt% stands for weight percent.
C stands for carbon.
rpm stands for revolutions per minute
Lime stands for CaCO₃.
Limestone stands for CaCO₃.
Dolomite stands for CaMg(CO₃)₂.

### BRIEF DESCRIPTION OF THE DRAWINGS

Figure 1 shows the sulphur content of slag samples from different batches during a steel manufacturing process.
Figure 2 shows a phase diagram for CaO-Al₂O₃-SiO₂ of slag samples from different batches during a steel manufacturing process.

### DETAILED DESCRIPTION OF PREFERRED EMBODIMENTS

In one embodiment, there is provided a method for producing pre-melted calcium aluminate suitable for steelmaking, said method comprising the steps of:
- heating a mixture of black dross comprising (1.0 wt%), SiO₂ (4.0 wt%), Ti₂O₃ (0.7 wt%), AlN (3.8 wt%), Al₂O₃ (24.2 wt%), CaO (1.7 wt%), Fe (0.9 wt%), MgO (7.0 wt%), NaCl (27.5 wt%), KCl (10.5 wt%) and metallic aluminium (18.7 wt%),
   with CaO and dolomite to a temperature of about 1400-1700°C in air in a furnace thereby forming volatile components and melted material,
- removing the volatile components, and
- cooling the melted material, thereby forming pre-melted calcium aluminate.

The resulting calcium aluminate was found to have the following composition: Sulphur (< 0.08 wt%), Al₂O₃ (53-55 wt%), CaO (40-43 wt%), SiO₂ (3.5-4.5 wt%), MgO (2.5 to 4 wt%), FeO (0.5 to 1.5 wt%), MnO (<0.1 wt%), P₂O₅(<0.06 wt%), V₂O₅(<0.05 wt%) and TiO₂ (0.4-0.6 wt%). The calcium aluminate was used as a slag forming agent in a steel manufacturing process as indicated below.

Steel was manufactured according to the following procedure.
i. Removal of slag from steel in a previous process step.
ii. Arrival of steel to be treated at the Vacuum Tank Degasser followed by transfer to a heating position.
iii. Addition of slag forming agents including the pre-melted synthetic slag forming agent.
iv. Melting of slag and heating of slag and steel to form a mixture.
v. Addition of alloy additives to the mixture obtained in step iv and heating of the resulting mixture.
vi. Transfer by wagon to a vacuum position.
vii. Vacuum treatment of the mixture including of the composition and addition of a small amount of dolomite.
viii. Completion of the vacuum treatment.
ix. Transfer of the mixture to a heating position.
x. Final heating and final adjustment.
xi. Departure.

In step iii, slag was formed by mixing the slag forming agents lime, dolomite and calcium aluminate. The calcium aluminate was obtained from black dross using the method described herein. The slag added to the steel had the composition Al₂O₃ (25.1 wt%), CaO (62.7 wt%), SiO₂ (2.9 wt%), MgO (8.6 wt%) and FeO (0.7 wt%) and a sulphur content equal to or less than 0.2 wt%.

The slag was mixed with steel and heated. Slag samples were taken after the heat treatment (i.e. at the end of step v), after the vacuum treatment (i.e. at the end of step viii) and after final heating and adjustment (i.e. at the end of step x). The slag samples were analyzed with respect to sulphur and to their composition of CaO-Al₂O₃-SiO₂. A total of seven steel manufacturing batches were analyzed.

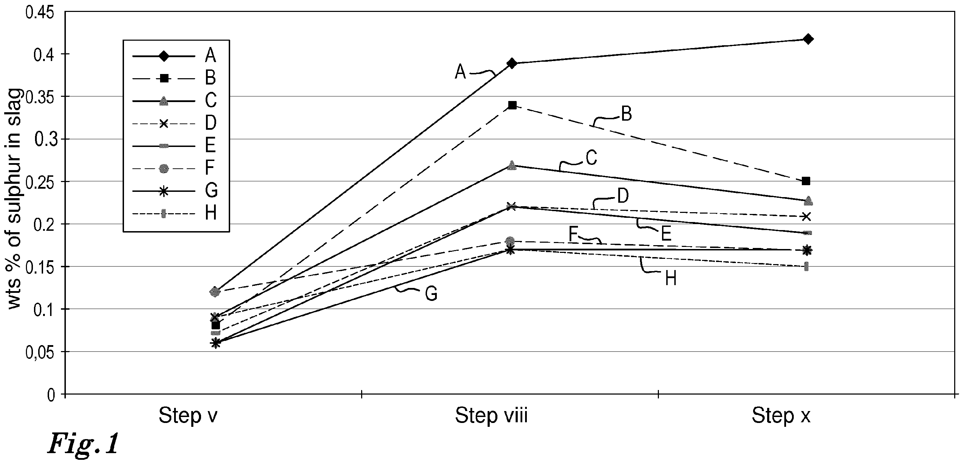

Figure 1 shows the slag sulphur content for slag samples of the eight steel manufacturing batches taken at various stages of the steel manufacturing process. The slag sulphur content was found to increase during the steel manufacturing process. After the heat treatment, the slag sulphur content varied from 0.06 to 0.12 wt%. After the vacuum treatment the slag sulphur content varied from 0.17 and 0.39 wt%. Final heatment and adjustment then led to a slightly lowered slag sulphur content for all batches but one so that the slag sulphur content was from 0.15 to 0.25 and 0.42, respectively. Thus, the overall slag sulphur content increased during the steel manufacturing process, and it could be concluded that the slag functioned as desulphurizing agent during the steel manufacturing process thereby providing steel of improved quality.

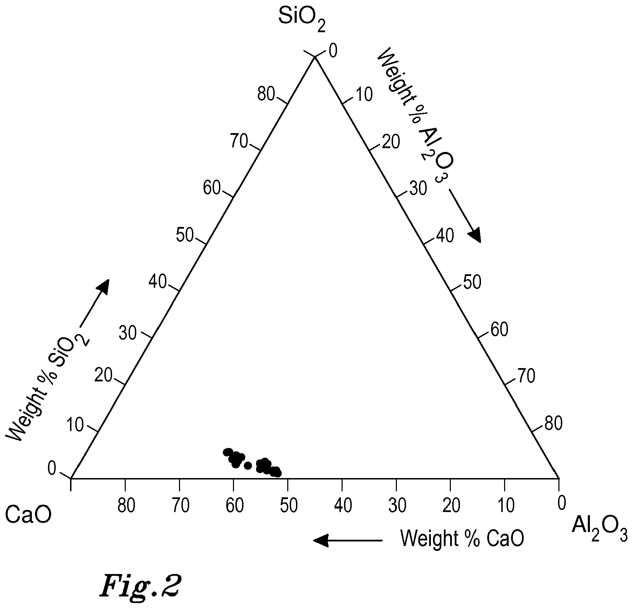

Figure 2 shows a phase diagram for the slag composition with respect to CaO-Al₂O₃-SiO₂ for slag samples of the seven steel manufacturing batches taken at various stages of the steel manufacturing process. In this diagram, remaining oxides including 5 to 7 wt% of MgO have been neglected. The diagram shows that there are essentially two groups of slag compositions. One group is closest to the CaO corner of the diagram, and shows the slag composition after the heat treatment. The other group is closest to the Al₂O₃ corner of the diagram, and shows the slag composition after the vacuum treatment. It is thus clear that the Al₂O₃ content increases during vacuum treatment with concomitant lowering of easily reduced oxides including SiO₂.

Accordingly, pre-melted calcium aluminate produced in accordance with the method described herein may be used as a desulphurizing agent in steel manufacturing processes. Moreover, the pre-melted calcium aluminate produced in accordance with the method described herein may be used a slag forming agent or slag in a steel manufacturing process. When used as a slag forming agent, the calcium aluminate produced in accordance with the method described herein may be used alone or together with other slag forming agents such as lime, dolomite and CaO precursors.

The invention will now be illustrated by the following non-limitative examples.

### EXAMPLES

### Example 1. Manufacture of calcium aluminate from black dross.

A rotary kiln was used which was built of HWM10 bricks (Al₂O₃ 73%, SiO₂ 26%), and the side ends were built of andalusite Calde Cast T95 (Al₂O₃, 96%). The kiln had previously been used in granulation of fayalite slag (Fe₂SiO₄), and therefore rinsing was performed with a 12 kg charge of Keneros (i.e. commercially available pre-melted calcium aluminate) after the pre-heating. The kiln was emptied of the rinsing charge, and black dross (BD), lime and dolomite were added in two batches. Batch 1 was performed in an empty kiln, and batch 2 was performed on the slag formed in batch 1. Each batch consisted of three additions of a mixture of BD, lime and dolomite. Immediately after the third addition had been made and melting had taken place samples were taken every ten minutes to check for the presence and amount of chloride and fluoride salts. The kiln temperature was monitored by means of two thermometers located in the side end bricks (temperature T1, measured 3 cm within the bricks lining the kiln, and temperature T2, measured 1 cm within the bricks lining the kiln). A pyrometer was also used to measure the slag temperature in the kiln. The kiln was heated using an oxy fuel burner with oxygen as fuel (of the type liquefied petroleum gas/propane)-the ratio was kept constant at 5 in order to take advantage of the fuel thermal value in the best possible way. The high ratio of oxygen to liquefied petroleum was also used to create a truly oxidative atmosphere within the kiln. The dwell time for batch 1 was 60 minutes prior to adding batch 2. The dwell time for batch 2 was 102 minutes, and then the kiln was emptied of the slag. After emptying of the kiln, BD was added without slag forming agent in order to study the evaporation from the pure raw material. The taking of samples of the slag in the kiln was performed using a stick, and samples were also taken from the slag that had been poured out when the stiffened slag was crushed. Samples of the final slag from batch 1 and batch 2 were taken after the experiment was finished and were placed indoors and outdoors, respectively, in order to study possible slag disintegration when exposed to precipitation (such as rain or snow) and atmospheric conditions. Samples were also taken for characterization with scanning electron microscope (SEM). Table 1 below shows the compositions of the raw materials used. Table 2 shows the amounts of the materials used in the experiment. The lime and the dolomite were crushed into pieces of a size from 3 to 11.6 mm prior to being used. During the experiment the kiln was rotated with a constant speed of 4 rpm. The oxy fuel burner was removed prior to charging the materials into the kiln, and thereafter the burner was brought back into the kiln while the kiln was rotated a couple of times so that the charged material was given enough time to stick to the kiln walls as well as to the slag present in the kiln.

**Table 1**

| | BD | Lime | Dolomite | HWM10 | Calde Cast T95 | Keneros |
|---|---|---|---|---|---|---|
| C | 1.0 | - | - | - | - | - |
| SiO₂ | 4.0 | 3.3 | 0.14 | 26 | 0.1 | 3.4 |
| Ti₂O₃ | 0.7 | - | - | - | - | - |
| TiO2 | x | - | - | 2.7 | - | 2.3 |
| AlN | 3.8 | - | - | - | - | - |
| Al₂O₃ | 24.2 | 1.1 | 0.11 | 73 | 96 | 41.5 |
| CaO | 1.7 | 93.3 | 52.2 | 0.2 | 0.1 | 50.5 |
| Fe | 0.9 | - | - | - | - | - |
| Fe₂O₃ | x | 0.5 | 0.25 | 1.1 | 0.1 | - |
| FeO | x | - | - | - | - | 1.7 |
| MgO | 7.0 | - | 45.9 | - | - | 0.6 |
| NaCl | 27.5 | - | - | - | - | - |
| KCl | 10.5 | - | - | - | - | - |
| Al | 18.7 | - | - | - | - | - |

**Table 2**

| Material | kg | kg/kg BD | Batch | Addition |
|---|---|---|---|---|
| Keneros | 16.0 | 0 | 0 | 1 |
| BD | 9.75 | - | 1 | 2,3,4 |
| Lime | 3.56 | 0.365 | 1 | 2,3,4 |
| Dolomite | 1.22 | 0.125 | 1 | 2,3,4 |
| BD | 9.75 | - | 2 | 5,6,7 |
| Lime | 3.56 | 0.365 | 2 | 5,6,7 |
| Dolomite | 1.22 | 0.125 | 2 | 5,6,7 |
| BD | 4.50 | - | 3 | 8 |

The chloride content was measured at the end of batch 2 and was found to be less than 0.5 wt%. The chloride content was measured as a function of time for each of the additions, and it was observed to decrease quickly.

The composition of the calcium aluminate was as follows: sulphur (< 0.08 wt%), Al₂O₃ (53-55 wt%), CaO (40-43 wt%), SiO₂ (3.5-4.5 wt%), MgO (2.5 to 4 wt%), FeO (0.5 to 1.5 wt%), MnO (<0.1 wt%), P₂O₅(<0.06 wt%), V₂O₅(<0.05 wt%) and TiO₂ (0.4-0.6 wt%).

SEM-EDS analysis (i.e Scanning Electron Microscope - Energy-Dispersive X ray Spectroscopy) of the central part of the obtained pieces of slag. Phases having a high content of Al₂O₃ (6Al₂O₃-CaO and Al₂O₃-MgO spinel) were found to crystallize first and were evenly distributed throughout the slag. The size of the crystals ranged from 20 to 200 micrometers. The rest of the melt was found to crystallize to a fine structure of lamellas of a thickness of about 10 micrometers. The lamella structure appeared to be rich in 2CaO-Al₂O₃-SiO₂ (Gehlenite). FeO was mainly found in MgO-Al₂O₃ spinels, probably in solid solution with MgO. High levels of "Br" was occasionally found in the MgO-Al₂O₃ and CaO-6Al₂O₃ phases. No silicate phases were found in the stiffened slag. SiO₂ was present in the fine lamella structures between the primary phases. No drops of metallic aluminium were found.

The slag stability of samples from batch 1 and batch 2 measured after 21 days indoors and outdoors, respectively, showed no disintegration. Thus, the slag was stable.

The Al₂O₃ containing brick lining of the rotary kiln was found to come off during the processing, which affected the composition of the final slag product. In particular, this affected the SiO₂ content to be higher than foreseen.

The experiment also indicated that magnesium chloride evaporated in the rotary kiln during the process. More dolomite should therefore be used if a higher MgO content is desired.

### Example 2. Use of calcium aluminate produced from black dross in steel manufacturing.

Calcium aluminate produced as described above was used in steel manufacturing. In this document, calcium aluminate produced in accordance with the method described herein is used interchangeably with the terms "pre-melted synthetic slag forming agent" or "pre-melted slag forming agent". The slag was analyzed with respect to inter alia sulphur content at various stages of the process.

The steel manufacturing was performed as follows.
xii. Removal of slag from steel in a previous process step.
xiii. Arrival of steel to be treated at the Vacuum Tank Degasser followed by transfer to a heating position.
xiv. Addition of slag forming agents including the pre-melted synthetic slag forming agent.
xv. Melting of slag and heating of slag and steel to form a mixture.
xvi. Addition of alloy additives to the mixture obtained in step iv and heating of the resulting mixture.
xvii. Transfer by wagon to a vacuum position.
xviii. Vacuum treatment of the mixture including of the composition and addition of a small amount of dolomite.
xix. Completion of the vacuum treatment.
xx. Transfer of the mixture to a heating position.
xxi. Final heating and final adjustment.
xxii. Departure.

The slag to be used in the steel manufacturing above was formed from a pre-melted slag forming agent, lime and dolomite. The composition of the pre-melted slag forming agent was as follows: sulphur (< 0.08 wt%), Al₂O₃ (53-55 wt%), CaO (40-43 wt%), SiO₂ (3.5-4.5 wt%), MgO (2.5 to 4 wt%), FeO (0.5 to 1.5 wt%), MnO (<0.1 wt%), P₂O₅(<0.06 wt%), V₂O₅(<0.05 wt%) and TiO₂ (0.4-0.6 wt%). The lime was composed of CaO (94 wt%), SiO₂ (2.0 wt%), Al₂O₃ (0.9 wt%), Fe₂O₃ (0.4 wt%). MgO (1.5 wt%), Na₂O + K₂O (0.05 wt%), TiO₂ (0.05 wt%), MnO (0.025 wt%), P (0.01 wt%) and S (0.015 wt%). The dolomite was composed of CaO (57.8 wt%), SiO₂ (0.8 wt%), Al₂O₃ (0.3 wt%), MgO (39.2 wt%). For the dolomite, no values were reported for Fe₂O₃, Na₂O + K₂O, TiO₂, MnO, P and S. The slag was formed by mixing the pre-melted slag forming agent (500 kg) with the lime (500 kg) and the dolomite (200 kg). The resulting slag had the following composition: Al₂O₃ (25.1 wt%), CaO (62.7 wt%), SiO₂ (2.9 wt%), MgO (8.6 wt%) and FeO (0.7 wt%).

The slag was used in the steel manufacturing process outlined above. Samples of the slag were taken at the end of step v, at the end of step viii and at the end of step x. The samples were analysed with respect to sulphur content as well as its composition of CaO-Al₂O₃-SiO₂. In total, seven batches were run. For all batches, the sulphur content of the slag was found to increase during the steel manufacturing process. This is illustrated in Figure 1. Further, it was observed that the CaO/Al₂O₃ ratio of the slag was higher for samples taken at the end of step v compared to samples taken at the end of step viii and prior to step xi. The CaO/Al₂O₃ ratio of the slag is illustrated in Figure 2.

During the steel manufacturing process the impression of the course of melting was that it took place in a smoother way than previously. The electrode position with respect to height needed less adjustment and the initial sound was softer compared to previous processes. This indicates that the slag melts very fast and that the arcs therefore could process a liquid slag, which always provides more stable conditions.

In future experiments it may be desirable to adjust the MgO content of the slag to be about 8 wt%. This may easily be achieved by using more dolomite.

## Claims

1. A method for producing pre-melted calcium aluminate suitable for steel manufacturing, said pre-melted calcium aluminate comprising from 0 to 5 wt% of SiO₂,
said method comprising the steps of:
- heating a mixture of
black dross comprising 20 wt% or more of one or more chloride salts, and CaO and/or a precursor thereof, wherein the CaO precursor comprises from 0 to 5 wt% of SiO₂,
in an oxidizing atmosphere,
thereby forming volatile components and melted material,
- removing the volatile components, and
- cooling the melted material thereby forming pre-melted calcium aluminate.

2. A method according to claim 1, wherein the oxidizing atmosphere comprises or consists of air.

3. A method according to any one of the previous claims, wherein the one or more chloride salts are NaCl and/or KCl.

4. A method according to any one of the previous claims, wherein the volatile components comprise or consist of NaCl and/or KCl.

5. A method according to any one of the previous claims, wherein said method does not comprise addition of SiO₂ to the black dross, CaO, the CaO precursor and/or the formed pre-melted calcium aluminate.

6. A method according to any one of the previous claims, wherein the black dross comprises from 0 to 5 wt% of SiO₂.

7. A method according to any one of the preceding claims, wherein the heating takes place in a rotary kiln.

8. A method according to any one of the previous claims, wherein the black dross comprises from 30 to 60 wt%, from 40 to 60 wt%, from 45 to 55 wt% or 50 wt% of one or more chloride salts.

9. A method according to any one of the previous claims, wherein the black dross comprises from 50 to 70 wt%, from 55 to 65 wt%, from 60 to 70 wt% of one or more chloride salts.

10. A method according to any one of the previous claims, wherein the black dross comprises Al₂O₃ in an amount from 30 to 50 wt%, from 35 to 45 wt% or from 30 to 40 wt%.

11. A method according to any one of the previous claims, wherein the black dross comprises Al₂O₃ in an amount from 40 to 70 wt%, 40 to 60 wt%, from 45 to 55 wt% or from 30 to 40 wt%.

12. A method according to any one of the previous claims, wherein the CaO precursor is selected from the group consisting of dolomite, CaMg(CO₃)₂, CaCO₃, CaSO₄ and Ca(OH)₂.

## Patentansprüche

1. Verfahren zur Herstellung von vorgeschmolzenem Calciumaluminat, das für die Stahlherstellung geeignet ist, wobei das vorgeschmolzene Calciumaluminat 0 bis 5 Gew.-% SiO₂ umfasst,
wobei das Verfahren die Schritte umfasst von:
- Erwärmen einer Mischung aus
schwarzer Krätze, umfassend 20 Gew.-% oder mehr von einem oder mehreren Chloridsalzen, und
CaO und/oder einer Vorstufe davon, wobei die CaO-Vorstufe 0 bis 5 Gew.-% SiO₂ umfasst,
in einer oxidierenden Atmosphäre,
wodurch flüchtige Komponenten und geschmolzenes Material gebildet werden,
- Entfernen der flüchtigen Bestandteile und
- Kühlen des geschmolzenen Materials, wodurch vorgeschmolzenes Calciumaluminat gebildet wird.

2. Verfahren nach Anspruch 1, wobei die oxidierende Atmosphäre Luft umfasst oder aus Luft besteht.

3. Verfahren nach einem der vorstehenden Ansprüche, wobei das eine oder die mehreren Chloridsalze NaCl und/oder KCl sind.

4. Verfahren nach einem der vorstehenden Ansprüche, wobei die flüchtigen Komponenten NaCl und/oder KCl umfassen oder daraus bestehen.

5. Verfahren nach einem der vorstehenden Ansprüche, wobei das Verfahren nicht die Zugabe von SiO₂ zu der schwarzen Krätze, CaO, der CaO-Vorstufe und/oder dem gebildeten vorgeschmolzenen Calciumaluminat umfasst.

6. Verfahren nach einem der vorhergehenden Ansprüche, wobei die schwarze Krätze 0 bis 5 Gew.-% SiO₂ umfasst.

7. Verfahren nach einem der vorstehenden Ansprüche, wobei das Erwärmen in einem Drehrohrofen erfolgt.

8. Verfahren nach einem der vorstehenden Ansprüche, wobei die schwarze Krätze 30 bis 60 Gew.-%, 40 bis 60 Gew.-%, 45 bis 55 Gew.-% oder 50 Gew.-% eines oder mehrerer Chloridsalze umfasst.

9. Verfahren nach einem der vorstehenden Ansprüche, wobei die schwarze Krätze 50 bis 70 Gew.-%, 55 bis 65 Gew.-%, 60 bis 70 Gew.-% eines oder mehrerer Chloridsalze umfasst.

10. Verfahren nach einem der vorstehenden Ansprüche, wobei die schwarze Krätze Al₂O₃ in einer Menge von 30 bis 50 Gew.-%, von 35 bis 45 Gew.-% oder von 30 bis 40 Gew.-% umfasst.

11. Verfahren nach einem der vorstehenden Ansprüche, wobei die schwarze Krätze Al₂O₃ in einer Menge von 40 bis 70 Gew.-%, 40 bis 60 Gew.-%, 45 bis 55 Gew.-% oder 30 bis 40 Gew.-% umfasst.

12. Verfahren nach einem der vorstehenden Ansprüche, wobei die CaO-Vorstufe ausgewählt ist aus der Gruppe bestehend aus Dolomit, CaMg(CO₃)₂, CaCO₃, CaSO₄ und Ca(OH)₂.

## Revendications

1. Procédé de production d'aluminate de calcium préalablement fondu adapté à la production d'acier, ledit aluminate de calcium préalablement fondu comprenant de 0 à 5 % en poids de SiO₂,
ledit procédé comprenant les étapes consistant à :
- chauffer un mélange de crasses noires comprenant 20 % en poids ou plus d'un ou plusieurs sels de chlorure, et de CaO et/ou d'un précurseur de celui-ci ; dans lequel le précurseur de CaO comprend de 0 à 5 % en poids de SiO₂, dans une atmosphère oxydante, formant ainsi des composants volatils et un matériau fondu,
- retirer les composants volatils, et
- refroidir le matériau fondu formant ainsi de l'aluminate de calcium préalablement fondu.

2. Procédé selon la revendication 1, dans lequel l'atmosphère oxydante comprend de l'air ou consiste en air.

3. Procédé selon l'une quelconque des revendications précédentes, dans lequel les un ou plusieurs sels de chlorure sont le NaCl et/ou le KCl.

4. Procédé selon l'une quelconque des revendications précédentes, dans lequel les composants volatils comprennent ou consistent en NaCl et/ou KCl.

5. Procédé selon l'une quelconque des revendications précédentes, dans lequel ledit procédé ne comprend pas l'addition de SiO₂ aux crasses noires, de CaO, du précurseur de CaO et/ou d'aluminate de calcium préalablement fondu formé.

6. Procédé selon l'une quelconque des revendications précédentes, dans lequel les crasses noires comprennent de 0 à 5 % en poids de SiO₂.

7. Procédé selon l'une quelconque des revendications précédentes, dans lequel le chauffage s'effectue dans un four rotatif.

8. Procédé selon l'une quelconque des revendications précédentes, dans lequel les crasses noires comprennent de 30 à 60 % en poids, de 40 à 60 % en poids, de 45 à 55 % en poids ou de 50 % en poids d'un ou plusieurs sels de chlorure.

9. Procédé selon l'une quelconque des revendications précédentes, dans lequel les crasses noires comprennent de 50 à 70 % en poids, de 55 à 65 % en poids, de 60 à 70 % en poids d'un ou plusieurs sels de chlorure.

10. Procédé selon l'une quelconque des revendications précédentes, dans lequel les crasses noires comprennent de l'Al₂O₃ en une quantité de 30 à 50 % en poids, de 35 à 45 % en poids ou de 30 à 40 % en poids.

11. Procédé selon l'une quelconque des revendications précédentes, dans lequel les crasses noires comprennent de l'Al₂O₃ en une quantité de 40 à 70 % en poids, de 40 à 60 % en poids de 45 à 55 % en poids ou de 30 à 40 % en poids.

12. Procédé selon l'une quelconque des revendications précédentes, dans lequel le précurseur de CaO est choisi dans le groupe consistant en dolomite, CaMg(CO₃)₂, CaCO₃, CaSO₄ et Ca(OH)₂.
